(19) Europäisches Patentamt

European Patent Office

Office européen des brevets

(11) Veröffentlichungsnummer: **0 268 738**
**B1**

# EUROPÄISCHE PATENTSCHRIFT

(45) Veröffentlichungstag der Patentschrift:
25.04.90

(21) Anmeldenummer: 87109969.3

(22) Anmeldetag: 10.07.87

(51) Int. Cl.⁴: **C02F 1/46, C25C 7/00,**
**C25C 7/02**

(54) **Elektrolysezelle zur elektrolytischen Abscheidung von Metallen.**

(30) Priorität: 24.11.86 DE 3640020

(43) Veröffentlichungstag der Anmeldung:
01.06.88 Patentblatt 88/22

(45) Bekanntmachung des Hinweises auf die Patenterteilung:
25.04.90 Patentblatt 90/17

(84) Benannte Vertragsstaaten:
CH DE ES FR GB IT LI SE

(56) Entgegenhaltungen:
DE-A- 2 534 757
US-A- 3 079 308
US-A- 4 399 020

(73) Patentinhaber: Heraeus Elektroden GmbH,
Heraeusstrasse 12 - 14, D-6450 Hanau/Main(DE)

(72) Erfinder: Gerhardt, Wolfgang, Bahnhofstrasse 52,
D-6463 Freigericht 5(DE)
Erfinder: Gehlert, Wolfgang, Geinhäuserstrasse 2,
D-8752 Johannesberg(DE)
Erfinder: Glück, Edgar, Geinhäuser Tal 5,
D-6487 Flörsbachtal(DE)

(74) Vertreter: Heinen, Gerhard, Dr., Heraeus Holding GmbH
Heraeusstrasse 12-14, D-6450 Hanau am Main(DE)

## Beschreibung

Die Erfindung betrifft eine Elektrolysezelle zur elektrolytischen Abscheidung von Metallen aus Metallionen enthaltender Flüssigkeit, insbesondere Prozeßabwasser, bestehend aus flächigen, zueinander parallel angeordneten ebenen Elektroden in einem Trog mit wenigstens einer Anode, welche im Abstand zu wenigstens zwei Kathoden mit Öffnungen angeordnet ist.

Zur Behandlung metallhaltiger Abwässer, wie sie beispielsweise bei der Elektroplattierung oder bei der Herstellung von Platinen für gedruckte Schaltungen durch Kupfer- oder Zinnabfüller entstehen, sind verschiedene Verfahren bekannt. So wird neben Verdampfung und chemischer Behandlung auch die Elektrolyse angewandt.

Aus der US-A 4 399 020 ist es bekannt, zur Rückgewinnung bzw. Abschiedung von Metallen aus elektrisch leitfähigen Lösungen in einem Trog aus elektrisch isolierendem Material eine Vielzahl von wechselzweise angeordneten plattenförmigen Anoden und Kathoden mit schwammartiger Struktur einzusetzen, wobei die Kathoden im wesentlichen senkrecht zu ihrer Plattenfläche von der Abwasserlösung durchströmt werden. Dabei werden aus dem Abwasser die Kationen der im Abwasser enthaltenen Metalle auf den Kathoden abgeschieden.

Mit zunehmender Betriebsdauer der Zelle werden die Poren der Kathode nach und nach durch Metallabscheidungen zugesetzt, woraus sich eine stetige Reduktion der tatsächlichen kathodischen Fläche und damit in gleichem Maße steigende spezifische kathodische Stromdichte ergibt. Daraus resultiert eine Begrenzung der erreichbaren Metallendkonzentration unter ökonomischen Bedingungen. Da außerdem die verstopften ehemals schwammförmigen Kathoden die Durchströmung der Zelle blockieren, müssen sie häufig erneuert werden.

Die Erfindung stellt sich die Aufgabe, eine einfache Anordnung von Kathoden sowie entsprechende Stromverteiler zu schaffen, mit der das Oberflächenverhältnis von Kathode zu Anode wesentlich vergrößert wird, um kostengünstigere und effizientere Elektrolysezellen für die Metallabscheidung herzustellen; weiterhin sollen die Kathoden auf einfache Weise einzeln austauschbar sein.

Die Aufgabe wird erfindungsgemäß durch die kennzeichneden Merkmale des Anspruchs 1 gelöst. Weitere vorteilhafte Ausgesaltungen sind den Unteransprüchen zu entnehmen.

In einer bevorzugten Ausführungsform bestehen die Anode und die Kathode aus ebenen, gleichgroßen, rechteckförmigen Streckmetallen. Diese werden in der Art angeordnet, daß sämtliche Flächen parallel zueinander stehen und die Verbindungslinie der Kanten senkrecht auf den Elektrodenflächen steht. Der Abstand der Kathoden untereinander ist gleich.

Die Streckmetalle der Kathoden bestehen entweder aus demselben Material wie das abzuscheidende Metall, oder aus einem Material, das in dem als Katholyten dienenden Abwasser chemisch beständig ist, wobei sich gegebenenfalls die kathodischen Metallabscheidungen leicht entfernen lassen. Die Anode besteht aus einem Ventilmetall mit einer electrokatalytisch wirksamen Beschichtung.

Durch den mit Widerständen unterschiedlicher Größe versehenen Stromverteiler auf der Kathodenseite wird sichergestellt, daß jede Kathode mit dem gleichen Strom beaufschlagt wird. Diese Widerstände können entweder aus diskreten Widerständen unterschiedlicher Größe bestehen, die über gleichlange oder verschieden lange Zuleitungen mit der Kathode verbunden sind oder aus Leitungen aus Widerstandsdraht mit unterschiedlicher Länge.

Anhand der Figuren 2 bis 3 ist der Gegenstand der Erfindung näher erläutert.

Dabei zeigt Figur 1 ein Blockschaltbild eine Zelle mit einer Anode, während Figur 2 eine Zelle mit zwei Anoden darstellt; in Figur 3 ist eine Zelle in perspektivischer Darstellung gezeigt.

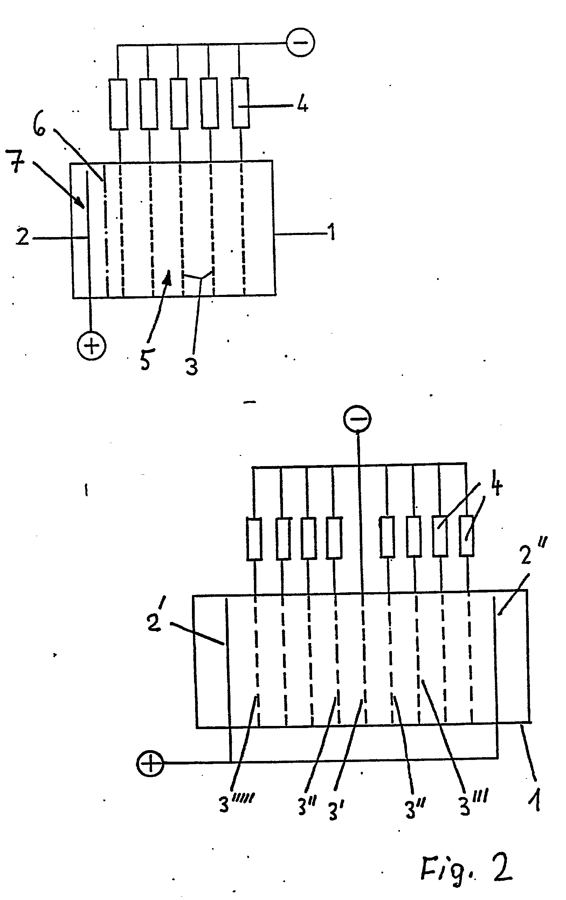

Gemäß Figur 1 enthält Trog 1 mit rechteckigem Grundriß eine der Trogwand 1' benachbart angeordnete ebene Anode 2, die mit dem positiven Pol (+) eines Stromanschlusses verbunden ist. Zwischen der parallel zur Trogwand angeordneten Anode 2 und der gegenüberliegenden Trogwand 1″ ist eine Vielzahl von ebenen Kathoden 3 angeordnet. Die einzelnen Kathoden 3 sind dabei über die im Blockschaltbild als Anschlußwinderstände 4 der Zuleitungen unterschiedlicher Größe mit dem negativen Pol (-) einer Stromquelle verbunden.

Ausgehend von der zur Anode 2 am weitesten befindlichen Kathode 3' steigen die Anschlußwiderstände bis zur der der Anode benachbarten Kathode nach folgendem Schema an:

O, R, 3 R, 6 R, 10 R ... $K_n.R$,

wobei $K_n = 2 . K_{n-1} + 1 - K_{n-2}$ ist, n die Gesamtzahl der Kathoden angibt und der Widerstandswert

$$R = \frac{d}{A \cdot \varkappa}$$

ist, wobei dem Abstand zur benachbarten Elektrode, A der projizierten Kathodenfläche und $\varkappa$ der Leitfähigkeit derFlüssigkeit entspricht. Im vorliegenden Fall wirkt auf die entfernteste Kathode kein besonderer Anschlußwiderstand, sondern nur der allgemeine Leitungswiderstand, dem alle Kathoden-Zuleitungen unterworfen sind.

Zwischen Anode 2 und Kathodenraum 5 kann eine Ionenaustauschermembran 6 angeordnet sein, die sicherstellt, daß sich die Anode stets in einem Anolytraum 7 befindet, während das zu behandelnde Abwasser dem Kathodenraum 5 zugeführt wird.

In Figur 2 ist eine Anordnung mit zwei sich gegenüberliegenden Anoden 2', 2″ dargestellt, wobei die beiden Anoden wiederum der Trogwand benachbart angeordnet sind; anhand dieser Figur ist erkennbar, daß die mittlere Kathode 3' keinen Widerstand zum negativen Anschlußpol aufweist, während die beiden benachbarten Kathoden 3″ mit einem Anschlußwiderstand des oben definierten Wertes R versehen sind, der sich wie alle übrigen Anschlußwiderstände aus der obigen Tabelle ergibt; so weisen die Kathoden 3‴ den Widerstandswert 3 R auf, während die den Anoden direkt gegenüberliegenden Kathoden 3''''' den Anschlußwiderstandswert 10 R aufweisen.

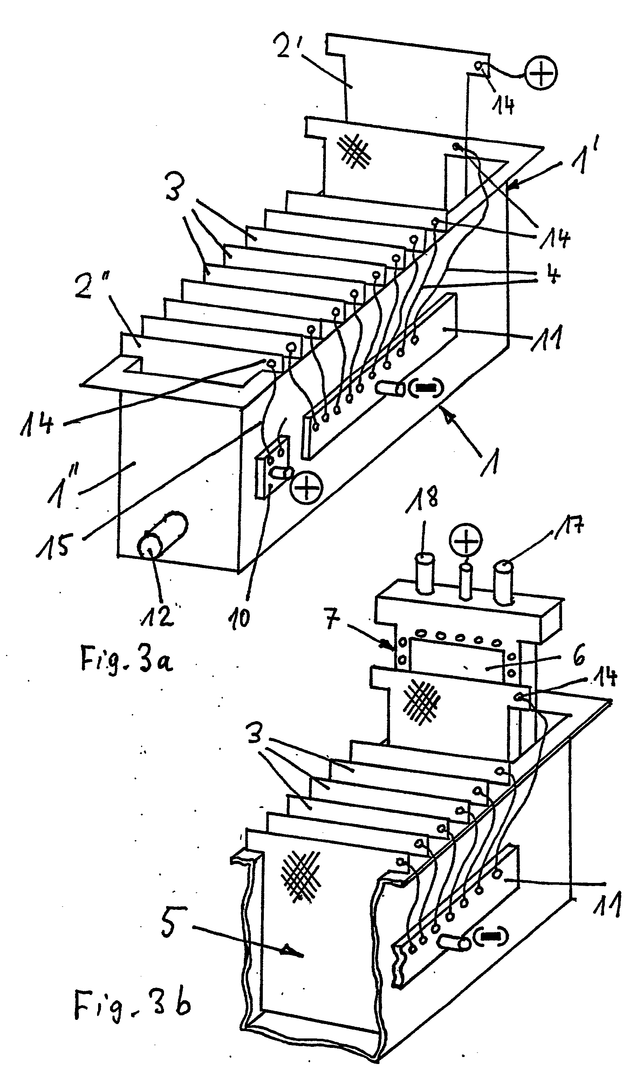

Figur 3a zeigt in perspekivischer Darstellung eine erfindungsgemäße Elektrolysezelle, die an zwei sich gegenüberliegenden Stirnwänden jeweils eine Anode 2', 2'' aufweist, die über eine Stromschiene 10 mit dem positiven Anschluß verbunden sind; zwischen den Anoden 2', 2'' befinden sich insgesamt 9 Kathoden, wobei alle Elektroden die gleiche Fläche aufweisen und in gleichen Abständen zueinander parallel angeordnet sind.

Der Trog 1 besteht aus elektrolytisch resistentem und elektrisch isolierendem Material; vorzugsweise wird Kunststoffmaterial wie beispielsweise Polyvinylchlorid oder Polypropylen eingesetzt. Der Trog 1 weist an seinen beiden Stirnflächen 1' und 1'' jeweils eine Öffnung 12 als Zu- bzw. Ablauf für das zu behandelnde Abwasser auf. Zur Flüssigkeitzumwälzung ist eine hier nicht dargestellte Gaseinblasvorrichtung mit dem Boden des Troges 1 verbunden.

An der Seitenwand des Troges 1 sind zwei elektrische Stromschienen 10, 11 angeordnet, von denen die mit den Anoden 2', 2'' verbundene Stromschiene 10 an den positiven Pol + angeschlossen ist, während die über die als Leitungen unterschiedlicher Länge ausgebildeten Anschlußwiderstände 4 mit den Kathoden 3 verbundene Stromschiene 11 an den negativen Pol angeschlossen ist.

Als Material für die Stromschienen werden vorzugsweise Kupfer oder Aluminium bzw. Kupfer- oder Aluminiumlegierungen verwendet. Die als Leitungen dienenden Anschlußwiderstände 4 bestehen aus einem elektrisch isolierten Widerstandsdraht, beispielsweise aus Titan- oder Konstantandraht.

Die Anoden 1', 1'' können die Form einer geschlossenen Fläche, eines Lochblechs, eines Gitters bzw. Streckmetalls oder mehrerer lamellenförmig angeordneter Flachprofile aufweisen.

Die Anoden bestehen aus einem Werkstoff, der elektrisch leitend und im Anolyten chemisch und elektrochemisch beständig ist, vorzugsweise aus Titan, Niob, Tantal oder deren Legierungen und ist mit einem elektrokatalytisch aktiven Material beschichtet.

Die zwischen den Anschlußfahnen 14 der Anoden 1', 1'' und der Stromschiene 10 angeordneten Anschlußleitungen 15 bestehen aus dem gleichen Material wie die Stromschiene 10; sie werden durch Verschraubung mit den Anschlußfahnen 14 und der Stromschiene 10 verbunden.

Die Kathoden 3 können aus dem gleichen Metall bestehen, das aus der Flüssigkeit abgeschieden werden soll, so daß sie bei der Raffination zusammen mit dem abgeschiedenen Material eingeschmolzen werden. Sie weisen die Form eines Streckmetalls, Lochblechs oder Drahtgewebes auf. Es ist jedoch auch möglich, die Kathoden aus einem anderen Material als dem abzuscheidenden Metall einzusetzen, wobei das abgeschiedene Metall nach dem Abscheidungsprozeß mechanisch entfernt wird.

Die Anschlußfahnen 14 der Kathoden 3 sind vorzguusweise über Steck- oder Klemmanschlüsse mit den als Anschlußwiderständen 4 dienenden Zuleitungen verbunden, so daß auch während des Betriebes eine Entnahme bzw. Austausch einzelner Kathoden möglich ist.

In Figur 3b ist als Teilausschnitt eine der Figur 3a entsprechende Elektrolysezelle dargestellt, in welcher der Kathodenraum 5 gegenüber den Anoden durch eine Membran 6 abgeteilt ist, so daß sich die Anoden in einem abgeschlossenen Anolytraum 7 befinden.

Durch die Membran 6 wird der Anolytraum 7 vollständig von dem Kathodenraum getrennt, so daß der zur Aufnahme des Abwassers dienende Kathodenraum auch als Katholytraum bezeichnet werden kann.

Als Anolyt ist beispielsweise Schwefelsäure für eine Vielzahl von elektrochemischen Abwasserbehandlungen geeignet. Das Elektrolytniveau im Anolytraum 7 liegt im oberen Bereich der Ionenaustauschermembran.

Zwecks Umwälzung des Anolyten sind die Anolyträume jeweils mit einer eigenen Elektrolytzufuhr- bzw. -abfuhrvorrichtung 17, 18 versehen. Die in den Anolyträumen befindlichen Anoden weisen zumindest auf ihrer der Membran zugekehrten Seite eine flächige Struktur auf, wobei die Anodenflächen parallel zu den Oberflächen der Kathoden 3 angeordnet sind. Die Abwasserzufuhr in den Innenraum 5 des Troges 1 erfolgt in einer bevorzugten Ausführungsform chargenweise, wobei das Abwasser nach dem Abschiedungsprozeß über ein Auslaßventil abfließen kann.

Als vorteilhaft erweist sich nach der Erfindung, daß das verhältnismäßig kostspielige Anodenmaterial nur in einer verhältnismäßig geringen Menge eingesetzt werden muß. Weiterhin ist neben der gleichmäßigen Abscheidung auf den Kathoden deren einfache Austauschbarkeit als vorteilhaft anzusehen, da die Kathodenentnahme während des Betriebes erfolgen kann.

Durch Einsatz einer Ionenaustauschermembran wird der Anwendungsbereich beispielsweise auf chloridhaltige Abwasser erheblich erweitert.

**Patentansprüche**

1. Elektrolysezelle zur elektrolytischen Abscheidung von Metallen aus Metallionen enthaltender Flüssigkeit, insbesondere Prozeßabwasser, bestehend aus flächigen, zueinander parallel angeordneten ebenen Elektroden in einem Trog mit wenigstens einer Anode, welche im Abstand zu wenigstens zwei Kathoden mit Öffnungen angeordnet ist, dadurch gekennzeichnet, daß von der Anode (2) aus gesehen wenigstens zwei Kathoden (3) auf wenigstens einer Seite der Anode (2) angeordnet sind, daß die Kathoden (3) über verschieden große Anschlußwiderstände (4) mit einem elektrischen Anschluß verbunden sind, wobei die Anschlußwiderstände (4) mit zunehmendem Abstand zwischen der Anode (2) und der jeweiligen Kathode (3) kleiner werden.

2. Elektrolysezelle nach Anspruch 1, dadurch gekennzeichnet, daß die Leitungen aus dem gleichen Werkstoff bestehen, jedoch unterschiedliche Längen besitzen.

3. Elektrolysezelle nach Anspruch 1 oder 2, dadurch gekennzeichnet, daß die Anode (2) von den Kathoden (3) durch eine Ionenaustauschermembran (6) abgeteilt ist, wobei der die Anode (2) umgebende Raum (7) einen gegenüber dem Kathodenteil (3) abgeschlossenen Anolytraum bildet.

4. Elektrolysezelle nach einem der Ansprüche 1 bis 3, dadurch gekennzeichnet, daß zur Flüssigkeitsumwälzvorrichtung eine Gaseinblasdüse in der Flüssigkeit mündet.

5. Elektrolysezelle nach Anspruch 4, dadurch gekennzeichnet, daß unterhalb der Kathoden (3) eine Gaseinblasvorrichtung angeordnet ist.

6. Elektrolysezelle nach Anspruch 5, dadurch gekennzeichnet, daß die Gaseinblasvorrichtung flüssigkeitsdicht mit dem Boden des Trogs (1) verbunden ist.

7. Elektrolysezelle nach Anspruch 6, dadurch gekennzeichnet, daß das Verhältnis von Anodenfläche zur Summe der Kathodenflächen im Bereich von 1 : 2 bis 1 : 50 liegt.

8. Elektrolysezelle nach einem oder mehreren der vorhergehenden Ansprüche, dadurch gekennzeichnet, daß zwei Anoden (2', 2") vorgesehen sind, zwischen denen eine Vielzahl von Kathoden (3) angeordnet ist.

9. Elektrolysezelle nach einem oder mehreren der vorhergehenden Ansprüche, dadurch gekennzeichnet, daß die Kathoden (3) gleich große Flächen aufweisen und bei Verwendung von drei und mehr Kathoden die Abstände zwischen den Kathoden gleich sind.

## Claims

1. An electrolytic cell for electrolytic separation of metals from liquid containing metal ions, in particular process waste water, comprising plane areal electrodes positioned mutually parallel within a trough with at least one anode which is installed with spacing from at least two cathodes with openings, characterised in that as seen from the anode (2), at least two cathodes (3) are situated on one side of the anode (2) and that the cathodes (3) are connected to an electrical connector via connecting resistors (4) of different value, the connecting resistors (4) diminishing with increased spacing between the anode (2) and the respective cathode (3).

2. An electrolytic cell according to claim 1, characterised in the conductors are formed from the same material but are of different lengths.

3. An electrolytic cell according to claim 1 or 2, characterised in that the anode (2) is separated from the cathodes (3) by an ion exchange membrane (6) the space (7) surrounding the anode (2) forming an anolyte space closed off from the cathode section (3).

4. An electrolytic cell according to one of the claims 1 to 3, characterised in that a nozzle for blowing in gas opens into the liquid as a liquid circulation device.

5. An electrolytic cell according to claim 4, characterised in that a device for blowing in gas is arranged beneath the cathodes (3).

6. An electrolytic cell according to claim 5, characterised in that the gas blowing device is joined to the bottom of the trough (1) in a fluid-tight manner.

7. An electrolytic cell according to claim 6, characterised in that the ratio of anode surface to the sum of the cathode surfaces lies within the range from 1 : 2 to 1 : 50.

8. An electrolytic cell according to one or more of the preceding claims, characterised in that two anodes (2', 2") are provided, between which is arranged a plurality of cathodes (3).

9. An electrolytic cell according to one or more of the preceding claims, characterised in that the cathodes (3) have equal surface areas and that where three and more cathodes are used the spacings between the cathodes are equal.

## Revendications

1. Cellule d'électrolyse pour la séparation électrolytique de métaux à partir de liquide contenant des ions métalliques, notamment à partir d'eau de processus effluente, constituée par des électrodes sensiblement bidimensionnelles mutuellement parallèles agencées dans un bac avec au moins une anode qui est agencée à distance d'au moins deux cathodes avec ouvertures, caractérisée par le fait que, vu de l'anode (2), au moins deux cathodes (3) sont agencées au moins d'un côté de l'anode (2), par le fait que les cathodes (3) sont reliées à une connexion électrique par l'intermédiaire de résistances de raccordement (4) ayant des valeurs différentes, ces résistances de raccordement (4) étant d'autant plus petites que la distance entre l'anode (2) et la cathode concernée (3) est plus grande.

2. Cellule d'électrolyse selon revendication 1, caractérisée par le fait que les lignes conductrices sont faites de la même matière mais ont toutefois des longueurs différentes.

3. Cellule d'électrolyse selon revendication 1 ou 2, caractérisée par le fait qu'une membrane échangeuse d'ions (6) forme un compartimentage entre l'anode (2) et les cathodes (3), le volume (7) entourant l'anode (2) formant un volume d'anolyte fermé par rapport à la partie cathiodique (3).

4. Cellule d'électrolyse selon l'une des revendications 1 à 3, caractérisée par le fait qu'un gicleur d'insufflation de gaz débouche dans le liquide, en tant que dispositif de brassage de liquide.

5. Cellule d'électrolyse selon revendication 4, caractérisée par le fait que le ou un dispositif d'insufflation de gaz est agencée en dessous des cathodes (3).

6. Cellule d'électrolyse selon revendication 5, caractérisée par le fait que le dispositif d'insufflation de gaz est relié, avec étanchéité aux liquides, au fond du bac (1).

7. Cellule d'électrolyse selon revendication 6, caractérisée par le fait que le rapport de la surface d'anode à la somme des surfaces des cathodes se situe dans la plage de 1 : 2 à 1 : 50.

8. Cellule d'électrolyse selon une ou plusieurs des revendications précédentes, caractérisée par le fait qu'il est prévu deux anodes (2', 2") entre lesquelles est agencée une pluralité de cathodes (3).

9. Cellule d'électrolyse selon une ou plusieurs des revendications précédentes, caractérisée par le fait que les cathodes (3) présentent des surfaces de même grandeur et, en cas d'utilisation de trois cathodes ou davantage, les distances entre cathodes sont égales.

Fig. 2

Fig. 3a

Fig. 3b